**Europäisches Patentamt**

**European Patent Office**

**Office européen des brevets**

(19)

(11) **EP 1 202 218 A2**

(12) **EUROPÄISCHE PATENTANMELDUNG**

(43) Veröffentlichungstag:
02.05.2002 Patentblatt 2002/18

(51) Int Cl.$^7$: **G06T 7/00**

(21) Anmeldenummer: 01119184.8

(22) Anmeldetag: 09.08.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.08.2000 DE 10041292**

(71) Anmelder: **DaimlerChrysler AG**
**70567 Stuttgart (DE)**

(72) Erfinder: **Ebinger, Martin**
**89073 Ulm (DE)**

(54) **Verfahren zur Registration der Istbeschreibung eines Messobjekts mit einer Sollbeschreibung des Messobjekts**

(57)     Es wird ein Verfahren zur Registration der Istbeschreibung MI eines Messobjekts mit einer Sollbeschreibung MS des Messobjekts vorgeschlagen, wobei die Istbeschreibung MI die tatsächlichen geometrischen Abmessungen, die tatsächliche Lage und die tatsächliche Orientierung des Messobjekts wiedergibt und mit der Sollbeschreibung MS definierte geometrische Abmessungen, eine definierte Lage und eine definierte Orientierung für das Messobjekt vorgegeben werden. Die Elemente der Istbeschreibung MI werden erfasst, und die Elemente der Sollbeschreibung MS werden bei-spielsweise in Form einer CAD-Beschreibung vorgege-ben. Erfindungsgemäß wird eine Transformation T zur Ausrichtung des Messobjekts entsprechend seiner Sollbeschreibung in einem iterativen Verfahren bestimmt. Dazu werden zu MI und MS Vorgabewerte definiert, was einer Merkmalsextraktion aus Messdaten und CAD-Be-schreibung entspricht. Dann werden korrespondieren-de Elemente aus MI und MS entweder festgelegt oder durch Bestimmung der Zielwerte zu den Vorgabewerten ermittelt. Die Zielwerte erweitern die jeweils andere Menge.

FIG. 18

**EP 1 202 218 A2**

**Beschreibung**

Die Erfindung betrifft ein Verfahren zur Registration der Istbeschreibung MI eines Messobjekts mit einer Sollbeschreibung MS des Messobjekts, wobei die Istbeschreibung MI die tatsächlichen geometrischen Abmessungen, die tatsächliche Lage und die tatsächliche Orientierung des Messobjekts wiedergibt und mit der Sollbeschreibung MS definierte geometrische Abmessungen, eine definierte Lage und eine definierte Orientierung für das Messobjekt vorgegeben werden. Die Elemente der Istbeschreibung MI werden erfasst, und die Elemente der Sollbeschreibung MS werden vorgegeben.

Im Allgemeinen dient eine Registration dazu, Daten miteinander zu verknüpfen, die in verschiedenen Koordinatensystemen vorliegen. Als Beispiel für eine derartige Verknüpfung sei an dieser Stelle der Soll-Ist-Vergleich zwischen CAD-Daten und Messdaten genannt. Die CAD-Daten beschreiben ein Konstruktionselement und stellen somit die Sollbeschreibung eines Werkstücks dar, das auf der Grundlage der vorgenannten CAD-Daten gefertigt worden ist. Die Messdaten stellen die Istbeschreibung des gefertigten Werkstücks dar, das das Messobjekt bildet. Die CAD-Daten liegen im sogenannten Konstruktionskoordinatensystem vor, während die Messdaten im Mess- bzw. Werkstückkoordinatensystem vorliegen. Mit Hilfe der Registration soll eine Transformation ermittelt werden, die die Relation der beteiligten Koordinatensysteme zueinander beschreibt.

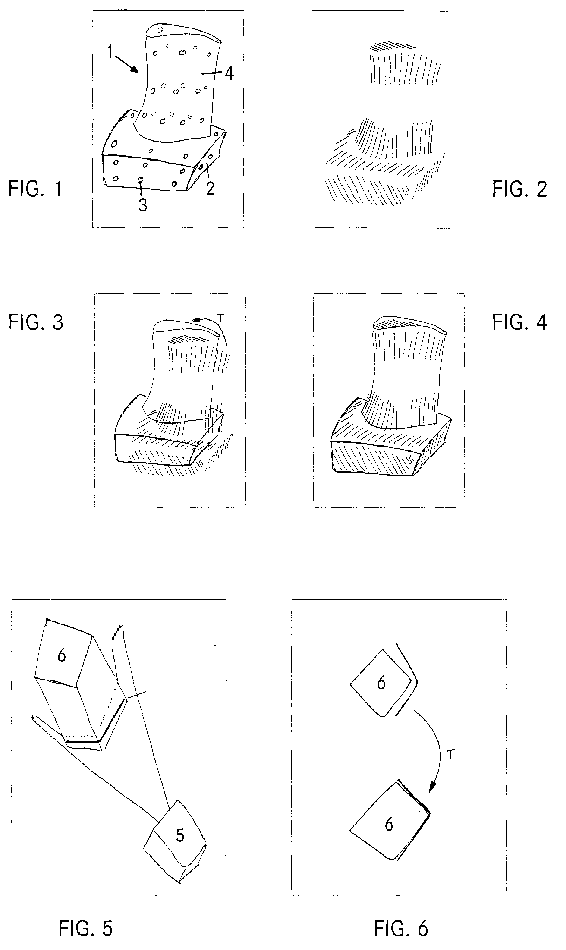

Anhand der Figuren 1 bis 4 sowie 5 und 6 werden nachfolgend zwei Anwendungsbeispiele für eine Registration beschrieben.

In den Figuren 1 bis 4 ist die Vorbereitung eines Soll-Ist-Vergleichs durch Registration mit anschließender Transformation dargestellt. Fig. 1 zeigt die CAD-Beschreibung einer Turbinenschaufel 1 mit Sockel 2. In der CAD-Beschreibung sind Ausrichtpunkte 3 definiert, die die Positionen vorgeben, an denen die zu bestimmende Transformation des Meßobjekts bestmöglich annähern soll. Den Ausrichtpunkten 3 kann ein Gewichtsfaktor zugeordnet sein, der die Wertigkeit eines Ausrichtpunktes 3 erhöht oder auch erniedrigt. So kann im hier dargestellten Beispiel einmal der Sockel 2, das andere Mal der Schaufelbereich 4 der Turbinenschaufel 1 stärker bewertet werden und also durch die Registration stärker angenähert werden. Im vorliegenden Fall wird der Sockel 2 als Montageort stark bindend angenommen. Die Messdaten sind in Fig. 2 dargestellt. In Fig. 3 sind die Messdaten zusammen mit der CAD-Beschreibung dargestellt, so dass die bestehende Fehlorientierung des Messobjekts bezüglich der CAD-Beschreibung deutlich sichtbar ist. Ein direkter Vergleich zwischen den beiden Datenmengen, nämlich der Sollbeschreibung in Form der CAD-Beschreibung und der Istbeschreibung in Form der Messdaten, ist so dennoch nicht ohne weiteres möglich. Mit Hilfe der Registration kann nun eine Transformation gefunden werden, die einen solchen Vergleich ermöglicht. Fig. 4 zeigt die Situation, nachdem eine geeignete Transformation auf die Messdaten angewandt worden ist. Diese Transformation liefert im Sockelbereich 2 der Turbinenschaufel 1 die angestrebte sehr gute Übereinstimmung. Der hier vorliegende Formfehler des Messobjekts im Schaufelbereich 4 kann nun bestimmt werden.

In den Figuren 5 und 6 ist eine Sensorkalibrierung bzw. eine Sensorausrichtung durch Registration dargestellt. Fig. 5 zeigt den Messaufbau für die Kalibrierung eines Konturensensors 5. An Stelle eines Werkstücks wird ein Prüfmittel 6 vermessen, dessen CAD-Beschreibung im Messkoordinatensystem des Sensors 5 vorliegt. Die Messwerte des kalibrierten Sensors 5 sollen innerhalb eines Toleranzfeldes auf dem Schnitt zwischen Prüfmittel 6 und Messebene des Sensors 5 liegen, was gepunktet dargestellt ist. Ist dies, wie hier durchgezogen dargestellt, nicht der Fall, wird eine undefinierte Abweichung zwischen dem erfassten Prüfmittel 6 und der CAD-Beschreibung des Prüfmittels 6 detektiert. Da die Ausbildung des Prüfmittels 6 aber bekannt ist, wird die aufgetretene Abweichung darauf zurückgeführt, dass der Sensor 5 nicht mehr kalibriert ist. Die Relation der Koordinatensysteme von Prüfmittel 6 und Sensor 5 ist nicht mehr hinreichend genau bekannt.

Fig. 6 zeigt, wie durch eine Registration der Messpunkte auf die CAD-Beschreibung des Prüfmittels 6 eine Transformation bestimmt wird, die den Kalibrierfehler minimiert. Die Kontur des Prüfmittels 6 muss nicht unbedingt exakt eingepasst werden, da ein Konturfehler, d.h. eine Formabweichung des Prüfmittels 6 von seiner CAD-Beschreibung, hier keine Rolle spielt. Im vorliegenden Fall kann eine Transformation ermittelt werden, die ausschließlich aus einer Translation und einer Rotation in der Sensorebene besteht. An dieser Stelle sei angemerkt, dass die gesuchte Transformation im Allgemeinen nicht wie im hier beschriebenen Beispiel beschränkt ist. Mit der Transformation wird auch die Fehlorientierung des Sensors ermittelt. Zur Kalibrierung des Sensors kann die Fehlorientierung entweder rechnerisch kompensiert werden, oder der Sensor kann entsprechend der ermittelten Transformation neu ausgerichtet werden. Die Abweichungen zwischen dem erfassten Prüfmittel 6 und der CAD-Beschreibung des Prüfmittels 6 stellen ein Maß für die Güte des Sensors dar.

Zur Ausrichtung des Messobjekts wird in der Praxis beispielsweise eine sogenannte Koordinatenmessgerät (KMG)-Messung durchgeführt. Dabei sind die Messorte, anhand derer das Messobjekt ausgerichtet werden soll, durch einen Prüfplan vorgegeben. Diese Messorte sind von den zugehörigen Referenzkoordinaten der CAD-Daten abgeleitet. Die Ausrichtung des Messobjekts erfolgt im Allgemeinen nach der 321-Methode, die nachfolgend beschrieben wird:

-   Als erste Achse des zu bildenden Werkstückkoordinatensystems wird eine Raumrichtung festgelegt. Je nach Art des Werkstücks kann es sich dabei um die Orientierung einer Ebene handeln, die anhand von mindestens drei Messpunkten bestimmt worden ist, oder auch um eine Zylinderachse, die anhand von n Messpunkten bestimmt worden ist.

- Die zweite Achse des Werkstückkoordinatensystems wird anhand von mindestens zwei Messpunkten bestimmt, die in einer Ebene senkrecht zur ersten Achse des Werkstückkoordinatensystems liegen können. Bei Bedarf kann auch die Projektion der Messpunkte auf diese Ebene benutzt werden.
- Damit ist auch die dritte Achse des Werkstückkoordinatensystems festgelegt, da diese senkrecht zu den beiden bereits bestimmten Achsen orientiert ist.
- Schließlich wird noch der Nullpunkt des Werkstückkoordinatensystems, beispielsweise ebenfalls mit Hilfe eines Messpunkts, definiert.
- Wenn das Werkstückkoordinatensystem und das Konstruktionskoordinatensystem nicht identisch sind, kann es erforderlich sein, das Werkstückkoordinatensystem in einem zusätzlichen Schritt zu transformieren, um das Konstruktionskoordinatensystem zu erhalten. Dazu kann beispielsweise der Nullpunkt des Werkstückkoordinatensystems in einer vorgegebenen fixen Translation verschoben werden.

Das voranstehend beschriebene Verfahren erweist sich in der Praxis als relativ unflexibel, da hier lediglich Messdaten ausgewertet werden können, die an den durch den Prüfplan vorgegebenen Messorten erfasst worden sind. Eine Ausrichtung des Messobjekts aufgrund eines überbestimmten Messdatenbestands ist hier nicht möglich. Koordinatenmessgeräte lassen sich außerdem aufgrund der für die Ausrichtung und eigentliche Messung erforderliche Ausführungszeit nur bedingt in Fertigungsprozessen einsetzen. So ist eine 100% ige Kontrolle bei Taktzeiten von 5 Minuten und kleiner nicht mehr erreichbar.

Der vorliegenden Erfindung liegt nun die Aufgabe zugrunde, ein Verfahren zur Registration der eingangs genannten Art so auszugestalten und weiterzubilden, dass auch Messdaten, die ein überbestimmtes Abbild des Messobjekts darstellen, verarbeitet werden können und dass die zur Bestimmung der Ausrichtung des Messobjekts benötigte Ausführungszeit den Einsatz des erfindungsgemäßen Verfahrens on-line in einem Fertigungsprozess erlaubt.

Das erfindungsgemäße Verfahren löst die voranstehende Aufgabe durch die Merkmale des Patentanspruchs 1. Danach ist das eingangs genannte Verfahren so ausgestaltet, daß eine Transformation T zur Ausrichtung des Messobjekts entsprechend seiner Sollbeschreibung in einem iterativen Verfahren bestimmt wird,

(1) indem eine initiale Transformation $T_{init}$ bestimmt wird, mit der die Istbeschreibung MI abgebildet wird, was in einer transformierten Istbeschreibung MIt resultiert, und die Sollbeschreibung MS mit der Inversen $T_{init}$- der initialen Transformation $T_{init}$ abgebildet wird, was in einer transformierten Sollbeschreibung MSt resultiert,

(2) indem zu Vorgabeelementen der transformierten Istbeschreibung MIt Zielelemente aus der Sollbeschreibung MS bestimmt werden und zu Vorgabeelementen der transformierten Sollbeschreibung MSt Zielelemente aus der Istbeschreibung MI bestimmt werden,

(3) indem die Zielelemente von MIt mit der Inversen $T_{init}$- transformiert werden und die Zielelemente für die Vorgabeelemente der Istbeschreibung MI bilden und die Zielelemente von MSt mit der initialen Transformation $T_{init}$ transformiert werden und die Zielelemente für die Vorgabeelemente der Sollbeschreibung MS bilden,

(4) indem zur Bestimmung der Qualität der Transformation $T_{init}$ sowohl aus den ermittelten Vorgabeelementen der transformierten Istbeschreibung MIt und entsprechenden Zielelementen der Sollbeschreibung MS ein skalarer Aufspannfehler ermittelt wird als auch aus den ermittelten Vorgabeelementen der Istbeschreibung MI und entsprechenden Zielelementen der transformierten Sollbeschreibung MSt ein skalarer Aufspannfehler ermittelt wird,

(5) indem die Transformation $T_{init}$ in Abhängigkeit von ihrer Qualität in einem explorierenden Verfahren modifiziert wird und mit der modifizierten Transformation entsprechend der Schritte (1) bis (5) verfahren wird, bis ein Abbruchkriterium für die Exploration erreicht ist.

Das erfindungsgemäße Verfahren ist hinsichtlich der Messwerterfassung wesentlich unsensibler als die aus der Praxis bekannten KMG-Messungen, für die die Messwerterfassung an durch einen Prüfplan vorgegebenen Messorten erfolgen muss. Im Gegensatz dazu können mit dem erfindungsgemäßen Verfahren Messdaten verarbeitet werden, die ein überbestimmtes Abbild des Messobjekts darstellen. Aus diesen Messdaten werden nämlich erfindungsgemäß die mit den Elementen der Sollbeschreibung am besten korrespondierenden Elemente der Istbeschreibung ermittelt, was im Rahmen einer detaillierten Erläuterung des erfindungsgemäßen Verfahrens nachfolgend im Einzelnen beschrieben wird. Im Rahmen des erfindungsgemäßen Verfahrens können daher Messwerte von 1D-, 2D- und 3D-Sensoren gemeinsam genutzt werden. Dabei können Sensoren mit unterschiedlichen Funktionsprinzipien zum Einsatz kommen, also beispielsweise taktil, induktiv oder optisch arbeitende Sensoren. Das erfindungsgemäße Verfahren kann entsprechend dem jeweiligen Einsatzzweck durch geeignete Vorgaben flexibel und individuell konfiguriert werden, was durch einen modularen Aufbau des erfindungsgemäßen Verfahrens zusätzlich begünstigt wird. Die Module des erfindungsgemäßen Verfahrens können einzeln oder auch in Kombination außerdem bei der Lösung weiterer messtechnischer Probleme, wie z.B. bei der Qualitätssicherung, der Sensorüberprüfung oder der Sensorkalibrierung, zum Einsatz kommen.

Grundsätzlich gibt es verschiedene Möglichkeiten, die Lehre der vorliegenden Erfindung zu realisieren und in vorteilhafter Weise auszugestalten. Dazu wird einerseits auf die dem Patenanspruch 1 nachgeordneten Ansprüche und andererseits auf die nachfolgende detaillierte Erläuterung des erfindungsgemäßen Verfahrens anhand der Zeichnungen verwiesen.

Figuren 1 bis 4      zeigen die Vorbereitung eines Soll-Ist-Vergleichs durch Registration mit anschließender Transformation (bereits voranstehend erörtert).

Figuren 5 und 6      zeigen eine Sensorkalibrierung bzw. eine Sensorausrichtung durch Registration (bereits voranstehend erörtert).

Figuren 7 bis 11     zeigen ein Verfahren zur Bestimmung eines Aufspannfehlers als Maß für die Abweichung der Istbeschreibung eines Messobjekts von seiner Sollbeschreibung.

Figuren 12 bis 14    zeigen ein Verfahren zur Bestimmung korrespondierender Elemente, insbesondere Raumpunkte, in zwei Beschreibungen eines Messobjekts.

Figuren 15 bis 20    zeigen ein Verfahren zur Bestimmung einer Transformation zur Ausrichtung eines Messobjekts entsprechend seiner Sollbeschreibung.

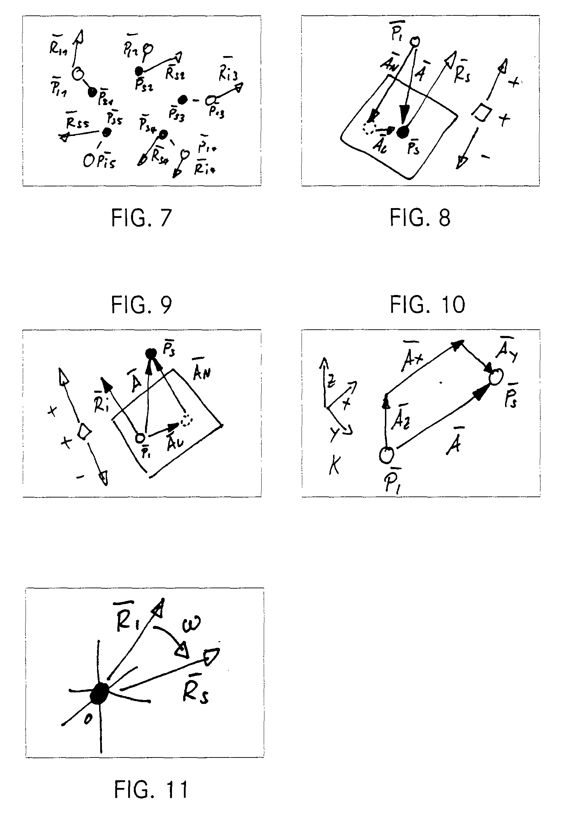

Nachfolgend wird - zum einfacheren Verständnis des erfindungsgemäßen Verfahrens - anhand der Figuren 7 bis 11 zunächst die Bestimmung eines skalaren Aufspannfehlers erläutert, wie er im Schritt (4) des erfindungsgemäßen Verfahren bestimmt wird. Der Aufspannfehler stellt ein Maß für die Abweichung der Istbeschreibung eines Messobjekts von seiner Sollbeschreibung dar bzw. ein Maß für die Fehlorientierung eines Messobjekts hinsichtlich seiner Sollbeschreibung.

Der Aufspannfehler wird bestimmt basierend auf:

- Einer Sollbeschreibung MS des Messobjekts, d.h. einer Formbeschreibung des Messobjekts in seiner korrekten Aufspannlage, wobei die Sollbeschreibung in Form von Punkten im Raum vorliegt und jedem Punkt eine Richtung im Raum zugeordnet sein kann,
- einer Istbeschreibung MI des Messobjekts, d.h. der Beschreibung der aktuellen Aufspannlage des Messobjekts, wobei die Istbeschreibung in Form von Punkten im Raum vorliegt und jedem Punkt eine Richtung im Raum zugeordnet sein kann,
- einer eindeutigen Zuordnung zwischen den Punkten der Sollbeschreibung und den Punkten der Istbeschreibung,
- einer Vorschrift zur Aufbereitung der Messdaten (Constraint Fehlermaßbestimmung), und zwar zur Bestimmung eines Fehlermaßes für jedes Paar korrespondierender Punkte der Sollbeschreibung und der Istbeschreibung,
- einer Vorschrift zur Zusammenführung der für jedes Paar korrespondierender Punkte der Sollbeschreibung und der Istbeschreibung bestimmten Fehlermaße (Constraint Aufspannfehlerbestimmung).

Die Istbeschreibung MI umfasst Merkmale, die aus der Gesamtheit der Messdaten gewonnen werden. Diese Merkmale können automatisch oder interaktiv durch den Anwender bestimmt sein (Vorgabewerte). Sie können auch bei der Einpassung als Zielwerte zu MS automatisch erzeugt werden, was nachfolgend noch näher erläutert wird. Die Elemente der Istbeschreibung MI können beispielsweise Einzelmesspunkte, durch Modellbildung gemittelte Messpunkte, Kreis- und Kugelmittelpunkte, Kreis- oder Zylinderachsen, die Orientierung einer Ebene etc., beschreiben. Geometrieelemente, wie Ebene, Kreis, etc., sind hierbei in die Messpunktmenge eingepasst, indem sie eine datenreduzierte, i. a. auch mit weniger Rauschen behaftete Beschreibung der Messpunkte darstellen. Außerdem können weitere Geometrieelemente zu den Messdaten gebildet werden, ohne dass diese Elemente der Istbeschreibung MI sind. Geometrieelemente können auch von Messdaten auf Messhilfsmitteln abgeleitet werden.

Messhilfsmittel sind beispielsweise in Bohrungen eingesetzte Stifte, in Ausstanzungen eingelegte Kugeln oder auch Aufspannvorrichtungen etc..

In analoger Weise kann die Sollbeschreibung MS Merkmale, wie Einzelpunkte auf CAD-Beschreibung, Achsen von Zylindern etc., Mittelpunkte von Kreisen oder Kugeln, etc. mit oder ohne Richtungsangabe umfassen. Hier können auf Basis der bestehenden Konstruktion neue oder abgeänderte Elemente als "Hilfsmittel" erzeugt und eingesetzt werden. Die Sollbeschreibung MS enthält Vorgabewerte und Zielwerte zu MI. Die Zielwerte erweitern die jeweils andere Menge, d.h. die Zielwerte zu MI erweitern die Sollbeschreibung MS, so wie die Zielwerte zu MS die Istbeschreibung MI erweitern.

Als Raumpunkte $P_{si}$ der Sollbeschreibung MS werden vorteilhafter Weise Punkte gewählt, die jeweils in einer der definierten Oberflächen des Messobjekts liegen. Diesen Raumpunkten $P_{si}$ können als Raumrichtungen $R_{si}$ dann jeweils die Normale auf die entsprechende definierte Oberfläche des Messobjekts im Raumpunkt $P_{si}$ zugeordnet werden. Entsprechend ist es von Vorteil, wenn als Raumpunkte $P_{li}$ der Istbeschreibung MI Punkte in einer der Oberflächen des Messobjekts erfasst werden. Diesen Raumpunkten $P_{li}$ wird dann jeweils die Normale auf die entsprechende erfasste Oberfläche des Messobjekts im Raumpunkt $P_{li}$ als Raumrichtung $R_{li}$ zugeordnet.

An dieser Stelle sei angemerkt, dass den Raumpunkten $P_{si}$ der Sollbeschreibung MS und den Raumpunkten $P_{li}$ der Istbeschreibung alternativ oder auch zusätzlich zu Raumrichtungen Featureelement zugeordnet sein können. In Frage kommen hier geometrische Featureelemente, wie z.B. ein Kreis , ein Zylinder oder eine Kugel, die die Ausbildung des Messobjekts in bestimmten Bereichen wiedergeben.

In Fig. 7 ist die Sollbeschreibung MS eines Messobjekts mit der korrespondierenden Istbeschreibung MI des Messobjekts dargestellt. Die Sollbeschreibung MS besteht hier aus den Raumpunkten $P_{Si}$ und den Raumrichtungen $R_{Si}$. Die Istbeschreibung besteht aus den Raumpunkten $P_{li}$ und den Raumrichtungen $R_{li}$.

Der skalare Aufspannfehler F dieser Gesamtkonfiguration wird rückgeführt auf die Bestimmung eines Fehlermaßes $F_i$ für jedes Paar korrespondierender Punkte aus der Sollbeschreibung MS und der Istbeschreibung MI. In den Figuren 8 bis 11 sind die verschiedenen Möglichkeiten der Fehlermaßbestimmung je nach Verfügbarkeit von Richtungsinformation zu den Raumpunkten $P_{si}$ und $P_{li}$ dargestellt.

In Fig. 8 ist dem Raumpunkt $P_s$ der Sollbeschreibung MS die Raumrichtung $R_s$ zugeordnet, während dem korrespondierenden Raumpunkt $P_l$ der Istbeschreibung MI keine Raumrichtung zugeordnet ist. Aus den Raumpunkten $P_s$ und P wird nun die vektorielle Differenz A in X,Y und Z-Richtung wie dargestellt bestimmt. Mittels der Richtungsinformation $R_s$ kann die vektorielle Differenz A auch in eine Vektorkomponente AN senkrecht zu der Ebene, gegeben durch den Raumpunkt $P_s$ und die Raumrichtung $R_s$, und in eine Vektorkomponente AL in dieser Ebene zerlegt werden. Für die in Fig. 8 dargestellte Konstellation kann die vektorielle Differenz A also in den Vektorkomponenten AX, AY und AZ oder in den Vektorkomponenten AN und AL beschrieben werden.

Bei der in Fig. 9 dargestellten Situation ist dem Raumpunkt $P_l$ der Istbeschreibung MI die Raumrichtung $R_l$ zugeordnet, während dem korrespondierenden Raumpunkt $P_s$ der Sollbeschreibung MS keine Raumrichtung zugeordnet ist. Auch hier lässt sich die vektorielle Differenz A in analoger Weise in den Vektorkomponenten AX, AY und AZ oder in den Vektorkomponenten AN und AL beschreiben, wobei AN die Vektorkomponente der vektoriellen Differenz A senkrecht zu der Ebene, gegeben durch den Raumpunkt $P_l$ und die Raumrichtung $R_l$, darstellt und AL die Vektorkomponente der vektoriellen Differenz A in dieser Ebene.

Ist, wie in Fig. 10 dargestellt, zu keinem der Raumpunkte $P_s$ und $P_l$ eine Raumrichtung verfügbar, so wird die vektorielle Differenz A bei gegebenem Koordinatensystem K in ihren Vektorkomponenten AX, AY und AZ dargestellt. Durch eine Kombination von AX, AY oder AZ kann somit die Differenz in einer der Hauptebenen des Koordinatensystems KXY, KYZ und KXZ oder die Differenz entlang einer der Achsen KX, KY oder KZ des Koordinatensystems angegeben werden.

Ist beiden der Raumpunkte $P_s$ und $P_l$ eine Raumrichtung $R_s$ und $R_l$ zugeordnet, so kann die vektorielle Differenz A entweder wie in Verbindung mit Fig. 8 oder wie in Verbindung mit Fig. 9 beschrieben bestimmt werden. Zusätzlich kann in diesem Falle ein Winkelfehler w, wie in Fig. 11 dargestellt, bestimmt werden.

Aus den Vektorkomponenten AX, AY, AZ, AL und/oder AN und dem Winkelfehler w wird ein skalares Fehlermaß für die miteinander korrespondierenden Raumpunkte $P_s$ und $P_l$ ermittelt. Dieses Fehlermaß umfasst eine Abstandskomponente und ggf. eine Winkelkomponente. Sowohl die Abstandskomponente als auch die Winkelkomponente kann mit einem Gewichtsfaktor Ga bzw. Gw bewertet werden, bevor diese beiden Komponenten aufaddiert werden. Als Abstandskomponente wird eine Vektorkomponente AX, AY, AZ, AN oder AL oder eine Kombination mehrerer dieser Vektorkomponenten gewählt. Durch vektorielle Addition ergibt sich daraus ein für den Abstandsfehler repräsentativer Differenzvektor D, dessen Länge als Abstandskomponente des skalaren Fehlermaßes bestimmt wird. Stand bei der Bestimmung der Vektorkomponenten AX, AY, AZ, AL und AN eine Raumrichtung zur Verfügung, so kann der Abstandskomponente des skalaren Fehlermaßes auch ein Vorzeichen zugeordnet werden. Das Vorzeichen wird entsprechend der Figuren 8 oder 9 bestimmt. Durch den Raumpunkt, dem eine Raumrichtung zugeordnet ist, in Verbindung mit dieser Raumrichtung wird eine Ebene definiert. Liegt der mit diesem Raumpunkt korrespondierende Raumpunkt oberhalb oder innerhalb dieser Ebene, so wird der Abstandskomponente ein positives Vorzeichen, +1, zugeordnet. Im anderen Falle ist das Vorzeichen der Abstandskomponente negativ, -1. Der Winkelfehler w bildet als skalarer Wert ohne weitere Umformung die Winkelkomponente des skalaren Fehlermaßes.

Die Fehlermaßbestimmung für ein Paar korrespondierender Raumpunkte der Sollbeschreibung und der Istbeschreibung eines Messobjekts lässt sich also wie folgt zusammenfassen:

Gegeben sind:

1. ein Raumpunkt $P_{si}$ der Sollbeschreibung und ggf. eine diesem Raumpunkt $P_{si}$ zugeordnete Raumrichtung

$R_{si}$ (die Raumrichtung $R_{si}$ kann auch fehlen),

2. ein mit dem Raumpunkt $P_{si}$ der Sollbeschreibung korrespondierender Raumpunkt $P_{li}$ der Istbeschreibung und ggf. eine diesem Raumpunkt $P_{li}$ zugeordnete Raumrichtung $R_{li}$ (die Raumrichtung $R_{li}$ kann auch fehlen),

3. eine Angabe, welche der Vektorkomponenten $AX_i$, $AY_i$, $AZ_i$, $AN$, $AL_i$ den Differenzvektor $D_i$ bilden sollen,

4. die Gewichtsfaktoren $Ga_i$ für den Abstandsfehler und $Gw_i$ für dem Winkelfehler.

5. Toleranzfelder für den Abstandsfehler und den Winkelfehler

Das gesuchte Fehlermaß für das Paar $P_{Si}$, $P_{li}$ wird dann bestimmt als

$$F_i = Ga_i \cdot \text{Länge}(D_i) + Gw_i \cdot w_i$$

Können die unter 1. und 2. aufgeführten Ausgangsdaten mit den unter 3. und 4. genannten Berechnungsvorschriften nicht bearbeitet werden, so wird ein Fehlermaß

$$F_i = 0$$

angesetzt.

Liegt Länge($D_i$) außerhalb des unter Punkt 5. genannten Toleranzfeldes für den Abstand, so wird die Abstandskomponente ignoriert und das Fehlermaß bestimmt als

$$F_i = Gw_i \cdot w_i$$

Liegt $w_i$ außerhalb des unter Punkt 5. genannten Toleranzfeldes für den Winkel, so wird die Winkelkomponente ignoriert und das Fehlermaß bestimmt als

$$F_i = Ga_i \cdot \text{Länge}(D_i)$$

Liegen sowohl Länge($D_i$) als auch $w_i$ außerhalb der unter Punkt 5. genannten Toleranzfelder, so wird das Fehlermaß bestimmt als

$$F_i = 0$$

Der skalare Aufspannfehler F der Gesamtkonfiguration, d.h. zwischen der Sollbeschreibung und der Istbeschreibung eines Messobjekts insgesamt, wird, wie bereits erwähnt, rückgeführt auf die Bestimmung eines Fehlermaßes $F_i$ für jedes Paar korrespondierender Punkte aus der Sollbeschreibung MS und der Istbeschreibung MI. Zur Bestimmung des skalaren Aufspannfehlers F werden alle Fehlermaße $F_i$ zusammengeführt. Dazu gibt es u.a. folgende Möglichkeiten:

- Die mittlere quadratische Abweichung aus den skalaren Aufspannfehlern $F_i$ bezogen auf den Erwartungswert Null, das kleinst mögliche Fehlermaß für ein Paar korrespondierender Raumpunkte

$$F = \text{SQRT}(\text{SUMME}(1, n, (Ga_i \cdot \text{Länge}(D_i) \cdot \text{Länge}(D_i) + Gw_i \cdot w_i \cdot w_i))) /$$

$$\text{SUMME}(1, n, (Ga_i + Gw_i))$$

wobei n die Anzahl der Paare ist, für die ein Aufspannfehler $F_i$ bestimmt werden konnte.

- Die mittlere Abweichung aus den Beträgen der skalaren Aufspannfehler F

$$F = \text{SUMME}(1, n, (\text{BETRAG}(Ga_i \cdot \text{Länge}(D_i)) + \text{BETRAG}(Gw_i \cdot w_i))) /$$

$$\text{SUMME}(1, n, (Ga_i + Gw_i))$$

wobei n die Anzahl der Paare ist, für die ein Aufspannfehler $F_i$ bestimmt werden konnte.

• Die maximale Abweichung aus den Beträgen der skalaren Aufspannfehler F

$$F = \text{MAXIMUM}(\text{BETRAG}(F_1), \text{BETRAG}(F_2), ..., \text{BETRAG}(F_n))$$

• Die maximale positive Abweichung der skalaren Aufspannfehler $F_i$

$$F = \text{MAXIMUM}(F_1, F_2, ..., F_n)$$

• Die maximal negative Abweichung der skalaren Aufspannfehler F,

$$F = \text{MINIMUM}(F_1, F_2, ..., F_n),$$

wobei n jeweils die Anzahl der Paare ist, für die ein Aufspannfehler F, bestimmt werden konnte.

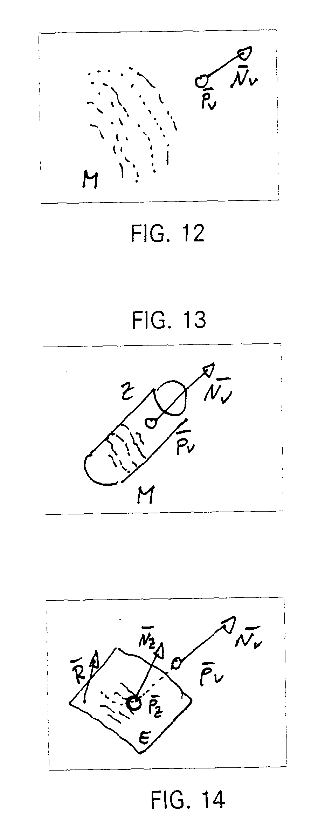

Anhand der Figuren 12 bis 14 wird nun ein Verfahren zur Bestimmung korrespondierender Elemente, insbesondere korrespondierender Raumpunkte, in zwei Beschreibungen eines Messobjekts erläutert, wie es in Schritt (2) des erfindungsgemäßen Verfahrens zum Einsatz kommt. Ziel ist die Bestimmung von Paaren, für die ein Aufspannfehler - wie voranstehend erläutert - ermittelt werden kann. Die Paarbestimmung erfolgt in mehreren Schritten und kann von jeder der beiden Beschreibungen des Messobjekts ausgehen. Dazu werden vorab Elemente einer der beiden Beschreibungen als Vorgabeelemente ausgewählt.

Die Mengen MI und MS werden mit Vorgabewerten besetzt. Die Methoden des nachfolgend näher erläuterten Verfahrens zur Bestimmung korrespondierender Elemente dienen auch der interaktiven Erzeugung der Vorgabewerte zu MI und MS durch den Anwender. Im allgemeinen bestehen zwischen den Vorgabewerten von MI und MS noch keine Verbindungen. Eine hier schon ableitbares Paar, z.B. eingepasster Zylinder gegen Konstruktionszylinder, kann durch den Anwender festgeschrieben werden. Existieren genügend solcher vordefinierter Paare, so kann die initiale Transformation automatisch bestimmt werden. Diese Vorgabewerte der Mengen MI und MS zeigen in eindeutiger Weise, wo die Einpassung erfolgen wird oder von welchem Datenbestand ausgehend eine Fehlermaßbestimmung erfolgen wird.

Bei der Ermittlung der Registrationstransformation werden die korrespondierenden, Zielwerte, zu den Vorgabewerten bestimmt, soweit dies möglich ist. Die Zielwerte werden der jeweils anderen Menge zugeordnet, so dass sie diese Menge erweitern. Es werden Paare aus MI und MS aufgebaut.

MI und MS stellen eine Datenkonzentration von Messung bzw. Sollbeschreibung dar. Diese Beschränkung auf das Wesentliche führt letzten Endes zu den erfindungsgemäßen Vorteilen:

- sichere Handhabung dieses Registrationsverfahrens,
- schnelle Bestimmung der Transformation oder des Aufspannfehlers,
- Bildung der Vorgabewerte auf der jeweils geeigneteren Datenmenge, Soll oder Ist, verbunden mit der automatischen Auflösung der Korrespondenz,
- Reduktion von Rauschen durch Einpassen von Geometrieelementen,
- Reduktion von Rauschen durch Modellbildung.

Basis für die Paarbestimmung sind:

• die Angabe von Vorgabeelementen,
• die Angabe von Kontrollparametern, mit deren Hilfe eine individuelle Untermenge der Zielmenge für jedes Vorgabeelement bestimmt werden kann,
• Angaben zur Objektbeschreibung (Datenbestand)
• Allgemeine Messwerte.
• Featureelemente, Kreis, Zylinder ...
• CAD-Beschreibung

- etc..

Die Zielmenge zu MI besteht aus:

- allen Konstruktionselementen der CAD-Beschreibung,
- beliebigen aus der CAD-Beschreibung extrahierten Merkmalen,
- auf Basis der CAD-Beschreibung neu konstruierten oder abgeänderten Elementen, insbesondere aus Elementen der Menge MS.

Die Zielmenge zu MS enthält:

- alle Messdaten,
- alle aus den Messdaten, auch der Messhilfsmittel, extrahierten Geometrieelemente, wie z.B. Kreis etc.,
- auch die Elemente aus MI.

Zur Paarbestimmung wird ausgehend von einem Vorgabeelement eine Untermenge der Zielmenge bestimmt. Die Untermenge der Zielmenge kann z.B. einen oder mehrere Raumpunkte, eine Flächenbeschreibung oder auch ein Featureelement umfassen. Durch Einpassung von geometrischen Objekten, wie einem Zylinder, einer Ebene, einer Kugel oder einem Kreis, die ein Modell des Messobjekts im Bereich der Untermenge darstellen, kann die Untermenge zur Bestimmung des Zielelements weiter eingeschränkt werden. Auf diese Weise können korrespondierende Elemente zweier Beschreibungen des Messobjekts bestimmt werden, selbst wenn die Beschreibungen überbestimmt sind.
Die Auswahlfunktion, mit deren Hilfe eine Untermenge der Zielmenge bestimmt wird, und die Abtastfunktion, mit der aus der Untermenge Punkt und Richtung des Zielwerts bestimmt wird, kann für jeden Vorgabewert individuell eingestellt werden. Insbesondere kann, wie bereits erwähnt, die automatische, gesteuerte Einpassung von Geometrieelementen auf Messdaten oder Konstruktion durch das Verfahren zur Bestimmung korrespondierender Elemente initiiert werden.
Die Auswahlfunktionen aus den Zielmengen erlauben:

- die Auswahl einer Untermenge durch Vorgabe des Zielraumes,
- und/oder die Auswahl einer Untermenge durch Vorgabe des Zieltyps, wie z.B. Achse, Punkt, Fläche, Messpunkte etc.,
- und/oder die Auswahl durch Vorgabe von Merkmalen, wie Name, Farbe der Visualisierung,
- die feste Zuordnung eines Geometrieelements,
- die feste Zuordnung eines Vorgabeelements, natürlich keines aus derselben Menge,
- keine Zuordnung, d. h. zu einem nicht auswertbaren Element der Vorgabemenge wird immer der Fehler 0 ermittelt.

Die Abtastfunktionen aus den Untermengen liefern u. a.:

- Punkt und/oder Richtung von vorgegebenen Geometrieelementen, wobei die Geometrieelemente feststehen,
- Punkt und/oder Richtung von automatisch eingepassten Geometrieelementen,

wobei eine Einpassung bei der Bestimmung der Transformation automatisch wiederholt durchgeführt wird,

- Projektionspunkt aus Modellbildung und Projektion des transformierten Vorgabewertes sowie Projektionsrichtung aus Vorgabe und/oder Model,
- den am nächsten liegenden Messpunkt,
- Etc.

Die nun mögliche feste Zuordnung von Soll-Ist-Paaren erlaubt die automatische Bestimmung einer Vororientierung $T_{init}$. Diese feste Zuordnung erlaubt auch die Paarung von Achsen, Geraden, Normalen, etc. ohne Berücksichtigung eines Ortes. Die Angabe eines Ortes war ehemals für die Abtastung zwingend nötig. Es können hiermit Paare definiert werden, die ausschließlich einen Winkelfehler beschreiben. Hiermit wird die Ausrichtung zu Bedingungen, wie "ist parallel zu" "steht senkrecht auf" etc., möglich.
Diese rein rechnerische Abtastung der Punktmessdaten und Bestimmung der Vorgabewerte von MI kann problemlos auf die taktile Koordinatenmesstechnik abgebildet werden. Dabei entspricht der Bestimmung eines Vorgabewertes zu MI das Digitalisieren von Messelementen, wie z.B. Punkt, Kugel, Zylinder, etc.. Die Bestimmung eines Zielwertes zu MS entspricht dem automatischen Punkt- oder Featuremessen.
Bei dem in den Figuren 12 bis 14 dargestellten Ausführungsbeispiel wurde ein Raumpunkt $P_v$ als Vorgabe-

element gewählt. Dem Raumpunkt $P_v$ ist eine Raumrichtung $N_v$ zugeordnet, was aber nicht immer der Fall sein muss. Fig. 12 zeigt eine Punktmenge M, die die Zielmenge für den Raumpunkt $P_v$ bildet. Aus dieser Zielmenge M soll nun ein mit dem Raumpunkt $P_v$ korrespondierendes Zielelement bestimmt werden. Das Zielelement soll ebenfalls ein Raumpunkt sein, dem ggf. eine Richtung im Raum zugeordnet sein kann.

Mittels eines dem Vorgabeelement zugeordneten Kontrollparameters wird aus der Zielmenge M eine Untermenge bestimmt, die weiterführenden Kriterien genügen soll, wie z.B., dass die Untermenge innerhalb eines bestimmten Volumens liegen muss oder einem Qualitätsmaß genügen muss. Im hier dargestellten Ausführungsbeispiel handelt es sich bei dem dem Raumpunkt $P_v$ zugeordneten Kontrollparameter um eine Volumenvorgabe, nämlich Angaben über die Form und Lage eines Suchzylinders Z relativ zum Raumpunkt $P_v$. Fig. 13 zeigt die Beschränkung der in Fig. 12 dargestellten Zielmenge M mittels des Suchzylinders Z.

Aus der Untermenge wird nun das Zielelement bestimmt. Besitzt das Vorgabeelement, wie im hier dargestellten Fall, eine Richtung, so kann diese in die Bestimmung des Zielelements mit einbezogen werden. Dazu wird hier in einem Zwischenschritt eine Ebene E als Modell des Messobjekts im Bereich des Suchzylinders Z eingepasst. Als Zielelement wird die Projektion des Vorgabeelements, des Raumpunkts $P_v$, entlang der zugeordneten Raumrichtung $N_v$ auf die Ebene E bestimmt, bzw. der Punkt der Zielmenge M, der dieser Projektion am nächsten liegt. Dem Zielelement wird außerdem die Orientierung der Ebene E als Raumrichtung zugeordnet.

In Fig. 14 ist die Projektion des Raumpunkts $P_v$ auf die Ebene E, eine Modellierung der durch den Suchzylinder Z definierten Untermenge, entlang der Raumrichtung $N_v$ dargestellt. Der Projektionspunkt bildet hier das gesuchte Zielelement, Raumpunkt $P_z$, und die Ebenenorientierung R wird dem Raumpunkt $P_z$ als Raumrichtung $N_z$ zugeordnet. Alternativ kann auch der Lotfußpunkt, nämlich die Projektion des Vorgabeelements, Raumpunkt $P_v$, entlang der Ebenenorientierung R auf die Ebene E als Zielelement bestimmt werden. War dem Vorgabeelement $P_v$ keine Raumrichtung zugeordnet, wurde aber eine Raumrichtung $N_z$ in Verbindung mit dem Zielelement bestimmt, so kann dem Vorgabeelement $P_v$ $N_z$ als neue Raumrichtung zugeordnet werden.

An dieser Stelle sei jedoch ausdrücklich darauf hingewiesen, dass sich sowohl die Zielmenge als auch eine geeignete Untermenge der Zielmenge und ein Zielelement aus der Untermenge der Zielmenge auch auf andere Weise bestimmen lassen, als dies in dem voranstehenden Ausführungsbeispiel beschrieben worden ist. Zu jeder Kombination aus Vorgabeelement und Zielmenge kann im Rahmen des erfindungsgemäßen Verfahrens eine geeignete Auswahlkette zusammengestellt werden.

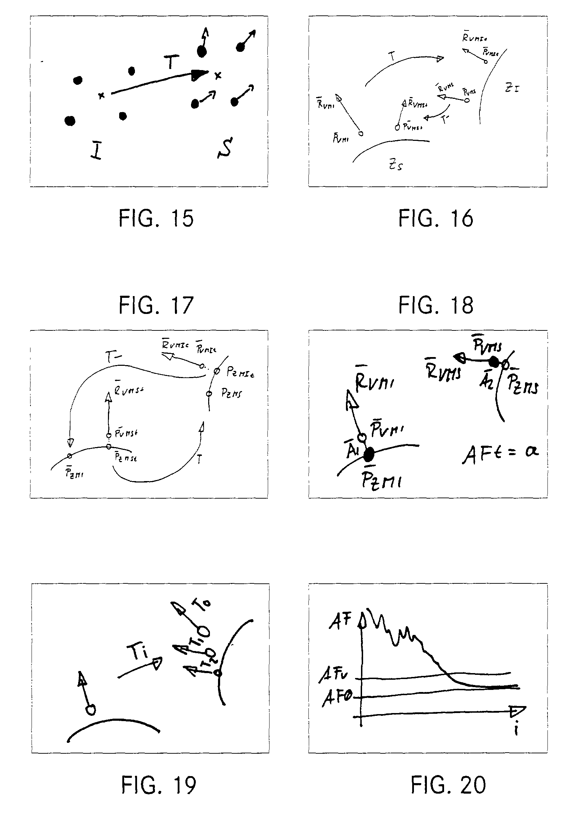

Anhand der Figuren 15 bis 20 wird nun noch ein Verfahren zur Bestimmung einer Transformation zur Ausrichtung eines Messobjekts entsprechend seiner Sollbeschreibung erläutert. Im Rahmen der Bestimmung einer solchen Transformation kommt sowohl das in Verbindung mit den Figuren 7 bis 11 beschriebene Verfahren zur Bestimmung eines Aufspannfehlers als auch das in Verbindung mit den Figuren 12 bis 14 beschriebene Verfahren zur Bestimmung korrespondierender Elemente zweier Beschreibungen zur Anwendung.

Bei der Bestimmung einer Transformation zur Ausrichtung eines Messobjekts sollen der Lagefehler, der Verkippungsfehler und auch der Skalierungsfehler korrigiert werden.

Das Verfahren basiert auf:

- Vorgabeelementen der Istbeschreibung MI des Messobjekts,
- Vorgabeelementen der Sollbeschreibung MS des Messobjekts,
- allen Vorgaben des voranstehend beschriebenen Verfahrens zur Bestimmung des Aufspannfehlers,
- allen Vorgaben des voranstehenden Verfahrens zur Paarbestimmung zu MI und MS,
- der Angabe aller Komponenten des Aufspannfehlers die korrigiert werden sollen (Constraint Ausrichtung). Dies sind u.a. Translation, Rotation und Skalierung in X-,Y-und Z- Richtung.
- Grenzwerte und Abbruchkriterien für die Exploration der Transformation.

In einem ersten Schritt wird eine initiale Transformation $T_{init}$ bestimmt. Wenn aus den Vorgabeelementen der Sollbeschreibung MS und der Istbeschreibung MI direkt Parameter der gesuchten Transformation bestimmt werden können, besteht die Möglichkeit, ausgewählte Parameter zu initialisieren. Andernfalls wird für $T_{init}$ die Einheitsmatrix angesetzt. In Fig. 15 ist beispielsweise dargestellt, wie die Translationskomponente der gesuchten Transformation aus den Schwerpunkten der Vorgabeelemente der Sollbeschreibung MS und der Istbeschreibung MI angenähert wird. Als initiale Transformation $T_{init}$ könnte aber auch eine Translation und/oder eine Rotation zwischen korrespondierenden Featureelementen der Istbeschreibung MI und der Sollbeschreibung MS bestimmt werden.

In einem zweiten Schritt werden die Vorgabeelemente der Sollbeschreibung MS mit der Inversen $T_{init}$- der initialen Transformation $T_{init}$ gegenüber der Istbeschreibung MI als Zielmenge orientiert, und die Vorgabeelemente der Istbeschreibung MI werden mit der initialen Transformation $T_{init}$ gegenüber der Sollbeschreibung MS als Zielmenge orientiert. Die Anwendung dieser Transformationen auf die Sollbeschreibung MS bzw. die Istbeschreibung MI resultiert in den Transformierten MSt bzw. MIt. In Fig. 16 ist die Orientierung der Vorgabeelemente der Sollbeschreibung MS und der Istbeschreibung MI durch $T_{init}$ dargestellt.

Nun werden mit dem voranstehend ausführlich erläuterten Verfahren zur Paarbestimmung zum einen die Zielelemente zu den Vorgabeelementen der transformierten Sollbeschreibung MSt aus der Istbeschreibung MI bestimmt und zum anderen die Zielelemente zu den Vorgabeelementen der transformierten Istbeschreibung MIt aus der Sollbeschreibung MS bestimmt. Wenn keine ausreichende Menge von Paaren erzeugt werden kann, schlägt die Ausrichtung fehl, d.h. die Transformation $T_{init}$ hat sich als ungeeignet erwiesen. In diesem Fall ist dem Verfahren zur Registration eine Vorausrichtung voranzustellen, was beispielsweise interaktiv durch den Anwender erfolgen kann. Meist läßt sich eine initiale Transformation fest voreinstellen.

Die gefundenen Zielelemente werden nun auf die Sollbeschreibung MS und die Istbeschreibung MI zurückübertragen. Die Zielelemente von MSt werden mit $T_{init}$ transformiert und bilden die Zielelemente für die Elemente der Sollbeschreibung MS. Entsprechend werden die Zielelemente von MIt mit $T_{init}$- transformiert und bilden die Zielelemente für die Elemente der Istbeschreibung MI. Das Resultat spiegelt somit die Situation nach Anwendung von $T_{init}$ wieder. Fig. 17 zeigt die im Rahmen der Paarbestimmung gefundenen Paare aus der Sollbeschreibung MS und der Istbeschreibung MI unter Berücksichtigung der Transformation $T_{init}$.

Durch Bestimmung eines skalaren Aufspannfehlers AFt wird das Resultat der Transformation $T_{init}$ bewertet, was in Fig. 18 dargestellt ist. Der Aufspannfehler AFt, beschreibt also die Qualität der Transformation $T_{init}$.

Erfindungsgemäß wird die initiale Transformation $T_{init}$ nun mit einem explorierenden Verfahren, z.B. Intervallhalbierung, Gradientenanalyse oder Newton Verfahren zur Nullstellensuche, modifiziert, was in Fig. 19 dargestellt ist. Mit dieser modifizierten Transformation wird genauso verfahren, wie mit der Transformation $T_{init}$. Die modifizierte Transformation wird also wieder bewertet und ggf. weiter modifiziert.

Dies wird so lange wiederholt, bis ein Kriterium zur Beendigung der Exploration erfüllt ist. Die Exploration nähert den Aufspannfehler AFt asymptotisch einem Grenzwert AF0 an. Dieser Grenzwert entspricht der best möglichen Ausrichtung und ist vorab nicht bekannt. Theoretisch kann der Grenzwert 0 sein, was einer perfekten, fehlerfreien Ausrichtung entspricht. Mögliche Kriterien zur Beendigung sind außerdem:

- Eine vorgegebene maximale Anzahl von Modifikationen.
- Der Aufspannfehler kann nicht weiter verbessert bzw. verkleinert werden.
- Der Aufspannfehler ist bereits kleiner als ein Vorgabewert AFv.
- Etc..

Fig. 20 zeigt die Annäherung von AFt an AF0. Ein möglicher Vorgabewert AFv ist ebenfalls dargestellt.

Bei der iterativen Suche der besten Einpassung erweist sich das nachfolgend erläuterte Verfahren unter Verwendung der Fourierzerlegung als vorteilhaft. Zunächst wird der zu optimierende Parameter A der gesuchten Transformation in einer Umgebung seines aktuellen Wertes in geeigneter Weise variiert. Als Ergebnis erhält man eine Folge X von Parameterwerten. Zu den Elementen von X werden die Fehlermaße bestimmt. Diese bilden eine Folge F(X). Der von X definierte Zahlenbereich wird in [-π..+π] abgebildet, was die lineare Funktion G leistet. Dann werden die Wertepaare (G(x),F(x)) x aus der Folge X einer Fourieranalyse unterzogen, um die Phasenlage w der Grundharmonischen zu ermitteln. Die Phasenlage w definiert den Ort an dem das abgetastete Fehlermaß F(x) minimal wird. Die inverse Funktion von G, G, bildet den gefundenen Phasenwert in den Definitionsbereich des explorierten Parameters ab. In einem Iterationsschritt wird das Verfahren sequentiell auf alle zu optimierenden Parameter angewandt. Die Iterationsschritte werden durchgeführt bis ein Abbruchkriterium erfüllt ist.

Ein Vorteil dieses Verfahrens ist, dass der neue Messwert direkt aus einer kleinen Zahl von Abtastungen der Fehlerfunktion gebildet wird. Im Vergleich zu der auf Intervallhalbierung basierenden Methode wird die Anzahl der zeitaufwendigen Auswertungen der Fehlerfunktion verringert. Außerdem bildet die Approximation der Fehlerfunktion mit Winkelfunktionen das Verhalten der Fehlerfunktion optimal ab. Vorteilhaft ist schließlich, dass nur eine Spektrallinie der Fourieranalyse bestimmt werden muss, von der nur die Phase relevant ist.

Damit wurde ein Maß für die Abhängigkeit der Fehlerfunktion von der Variation eines Parameters eingeführt, womit bestimmt werden kann, ob Transformationsparameter durch die Vorgaben hinreichend festgelegt sind.

**Patentansprüche**

1. Verfahren zur Registration der Istbeschreibung MI eines Messobjekts mit einer Sollbeschreibung MS des Messobjekts,

   wobei die Istbeschreibung MI die tatsächlichen geometrischen Abmessungen, die tatsächliche Lage und die tatsächliche Orientierung des Messobjekts wiedergibt und mit der Sollbeschreibung MS definierte geometrische Abmessungen, eine definierte Lage und eine definierte Orientierung für das Messobjekt vorgegeben werden,

   bei dem die Elemente der Istbeschreibung MI erfasst werden und die Elemente der Sollbeschreibung MS vorgegeben werden,

**dadurch gekennzeichnet, dass** eine Transformation T zur Ausrichtung des Messobjekts entsprechend seiner Sollbeschreibung in einem iterativen Verfahren bestimmt wird,

(1) indem eine initiale Transformation $T_{init}$ bestimmt wird, mit der die Istbeschreibung MI abgebildet wird, was in einer transformierten Istbeschreibung MIt resultiert, und die Sollbeschreibung MS mit der Inversen $T_{init}$- der initialen Transformation $T_{init}$ abgebildet wird, was in einer transformierten Sollbeschreibung MSt resultiert,

(2) indem zu Vorgabeelementen der transformierten Istbeschreibung Mit Zielelemente aus der Sollbeschreibung MS bestimmt werden und zu Vorgabeelementen der transformierten Sollbeschreibung MSt Zielelemente aus der Istbeschreibung MI bestimmt werden,

(3) indem die Zielelemente von MIt mit der Inversen $T_{init}$- transformiert werden und die Zielelemente für die Vorgabeelemente der Istbeschreibung MI bilden und die Zielelemente von MSt mit der initialen Transformation $T_{init}$ transformiert werden und die Zielelemente für die Vorgabeelemente der Sollbeschreibung MS bilden,

(4) indem zur Bestimmung der Qualität der Transformation $T_{init}$ sowohl aus den ermittelten Vorgabeelementen der transformierten Istbeschreibung Mit und entsprechenden Zielelementen der Sollbeschreibung MS ein skalarer Aufspannfehler ermittelt wird als auch aus den ermittelten Vorgabeelementen der Istbeschreibung MI und entsprechenden Zielelementen der transformierten Sollbeschreibung MSt ein skalarer Aufspannfehler ermittelt wird,

(5) indem die Transformation $T_{init}$ in Abhängigkeit von ihrer Qualität in einem explorierenden Verfahren modifiziert wird und mit der modifizierten Transformation entsprechend der Schritte (1) bis (5) verfahren wird, bis ein Abbruchkriterium für die Exploration erreicht ist.

2. Verfahren nach Anspruch 1, **dadurch gekennzeichnet, dass** Raumpunkte $P_{Si}$ als Elemente der Sollbeschreibung MS und Raumpunkte $P_{Ii}$ als Elemente der Istbeschreibung MI gewählt werden.

3. Verfahren nach Anspruch 2, **dadurch gekennzeichnet, dass** mindestens einem der vorgegebenen Raumpunkte $P_{Si}$ der Sollbeschreibung MS eine vorgegebene Raumrichtung $R_{Si}$ zugeordnet wird, so dass die Sollbeschreibung MS mindestens für einen Raumpunkt $P_{Si}$ eine Raumrichtung $R_{Si}$ umfasst.

4. Verfahren nach einem der Ansprüche 2 oder 3, **dadurch gekennzeichnet, dass** zu mindestens einem der erfassten Raumpunkte $P_{Ii}$ der Istbeschreibung MI eine Raumrichtung $R_{Ii}$ erfasst wird, so dass die Istbeschreibung MI mindestens für einen Raumpunkt $P_{Ii}$ eine Raumrichtung $R_{Ii}$ umfasst.

5. Verfahren nach einem der Ansprüche 3 oder 4, **dadurch gekennzeichnet, dass** mindestens ein Raumpunkt $P_{Si}$ der Sollbeschreibung MS in einer der definierten Oberflächen des Messobjekts liegt und dass diesem Raumpunkt $P_{Si}$ die Normale auf die definierte Oberfläche des Messobjekts im Raumpunkt $P_{Si}$ als Raumrichtung $R_{Si}$ zugeordnet wird.

6. Verfahren nach einem der Ansprüche 3 bis 5, **dadurch gekennzeichnet, dass** mindestens ein Raumpunkt $P_{Ii}$ der Istbeschreibung MI in einer der erfassten Oberflächen des Messobjekts liegt und dass diesem Raumpunkt $P_{Ii}$ die Normale auf die erfasste Oberfläche des Messobjekts im Raumpunkt $P_{Ii}$ als Raumrichtung $R_{Ii}$ zugeordnet wird.

7. Verfahren nach einem der Ansprüche 2 bis 6, **dadurch gekennzeichnet, dass** mindestens einem der vorgegebenen Raumpunkte $P_{si}$ der Sollbeschreibung MS mindestens ein Featureelement zugeordnet ist, so dass die Sollbeschreibung MS mindestens für einen Raumpunkt $P_{si}$ ein Featureelement umfasst.

8. Verfahren nach einem der Ansprüche 2 bis 7, **dadurch gekennzeichnet, dass** zu mindestens einem der erfassten Raumpunkte $P_{Ii}$ der Istbeschreibung MI mindestens ein Featureelement erfasst wird, so dass die Istbeschreibung MI mindestens für einen Raumpunkt $P_{Ii}$ ein Featureelement umfasst.

9. Verfahren nach einem der Ansprüche 7 oder 8, **dadurch gekennzeichnet, dass** es sich bei dem Featureelement um ein geometrisches Featureelement, vorzugsweise um einen Kreis, einen Zylinder, eine Kugel oder eine Ebene, handelt.

10. Verfahren nach einem der Ansprüche 1 bis 9, **dadurch gekennzeichnet, dass** als initiale Transformation $T_{init}$ die Einheitsmatrix bestimmt wird.

11. Verfahren nach einem der Ansprüche 1 bis 9, **dadurch gekennzeichnet, dass** eine initiale Transformation $T_{init}$ automatisch bestimmt wird auf Grund von vordefinierten Paaren korrespondierender Elemente der Sollbeschreibung MS und der Istbeschreibung MI.

12. Verfahren nach einem der Ansprüche 2 bis 9, **dadurch gekennzeichnet, dass** der Sollschwerpunkt $S_s$ aus den vorgegebenen Raumpunkten $P_{si}$ der Sollbeschreibung MS ermittelt wird, dass der Istschwerpunkt $S_i$ aus den erfassten Raumpunkten $P_{li}$ der Istbeschreibung MI ermittelt wird und dass als initiale Transformation $T_{init}$ eine Translation des Istschwerpunkts $S_i$ auf den Sollschwerpunkt $S_s$ bestimmt wird.

13. Verfahren nach einem der Ansprüche 7 bis 9, **dadurch gekennzeichnet, dass** als initiale Transformation $T_{init}$ eine Translation und/oder eine Rotation zwischen korrespondierenden Featureelementen der Istbeschreibung MI und der Sollbeschreibung MS bestimmt wird.

14. Verfahren nach einem der Ansprüche 1 bis 13, **dadurch gekennzeichnet,**

- **dass** zum Ermitteln korrespondierender Elemente zweier Beschreibungen des Messobjekts zunächst Elemente einer der beiden Beschreibungen ausgewählt werden, die die Vorgabeelemente bilden, während die Elemente der anderen Beschreibung die Zielmenge bilden,
- **dass** jedem Vorgabeelement mindestens ein Kontrollparameter zugeordnet ist, mit dessen Hilfe eine individuelle Untermenge der Zielmenge für jedes Vorgabeelement bestimmt wird,
- **dass** auf der Basis von Zusatzinformationen über die geometrische Ausbildung des Messobjekts für jedes Vorgabeelement ein Zielelement aus der vorab bestimmten, individuellen Untermenge der Zielmenge bestimmt wird.

15. Verfahren nach Anspruch 14, **dadurch gekennzeichnet, dass** mit dem Kontrollparameter die Form eines Suchvolumens und dessen Lage relativ zum Vorgabeelement beschrieben wird und dass die Elemente der Zielmenge, die sich innerhalb des Suchvolumens befinden, die gesuchte Untermenge der Zielmenge bilden.

16. Verfahren nach Anspruch 15, **dadurch gekennzeichnet, dass** ein Zylinder, eine Kugel oder ein Kubus als Suchvolumen gewählt wird.

17. Verfahren nach einem der Ansprüche 14 bis 16, **dadurch gekennzeichnet, dass** die Zusatzinformationen über die geometrische Ausbildung des Messobjekts in Form einer CAD-Beschreibung und/oder in Form von Featureinformationen vorliegen.

18. Verfahren nach einem der Ansprüche 14 bis 17, **dadurch gekennzeichnet,**

- **dass** es sich bei dem Vorgabeelement um einen Raumpunkt $P_v$ handelt,
- **dass** es sich bei der Zielmenge um eine Punktmenge handelt,
- **dass** dem Raumpunkt $P_v$ ein Suchvolumen als Kontrollparameter zugeordnet ist,
- **dass** als individuelle Untermenge der Zielmenge für den Raumpunkt $P_v$ die Punkte der Zielmenge bestimmt werden, die innerhalb des Suchvolumens liegen,
- **dass** das Zielelement - Raumpunkt $P_z$ - des Raumpunkts $P_v$ aus den Punkten der individuellen Untermenge bestimmt wird, indem in die Punkte der individuellen Untermenge eine Fläche als Modell des Messobjekts eingepasst wird.

19. Verfahren nach Anspruch 18, **dadurch gekennzeichnet, dass** dem Raumpunkt $P_v$ eine Raumrichtung $N_v$ zugeordnet ist und dass das Zielelement $P_z$ als der Punkt der Untermenge bestimmt wird, der der Projektion des Raumpunktes $P_v$ entlang der Raumrichtung $N_v$ auf die Fläche am nächsten liegt.

20. Verfahren nach einem der Ansprüche 18 oder 19, **dadurch gekennzeichnet, dass** eine Ebene E als Modell des Messobjekts im Suchvolumen gewählt wird.

21. Verfahren nach Anspruch 20, **dadurch gekennzeichnet, dass** dem Zielelement $P_z$ die Orientierung R der Ebene E als Raumrichtung $N_z$ zugeordnet wird. oder allgemein jede verwertbare Richtungsinformation, die aus der Untermenge der Zielmenge abgeleitet werden kann.

22. Verfahren nach einem der Ansprüche 17 bis 20, **dadurch gekennzeichnet, dass** dem Zielelement $P_z$ eine Richtungsinformation zugeordnet wird, die aus der Untermenge der Zielmenge abgeleitet wird.

23. Verfahren nach Anspruch 20 bis 22, **dadurch gekennzeichnet, dass** das Zielelement $P_z$ als der Punkt der Untermenge bestimmt wird, der dem Lotfußpunkt des Raumpunktes $P_v$ auf die Ebene E am nächsten kommt.

24. Verfahren nach einem der Ansprüche 20 bis 23, **dadurch gekennzeichnet, dass** dem Raumpunkt $P_v$ die Raumrichtung $N_z$ zugeordnet wird, wenn dem Raumpunkt $P_v$ keine Raumrichtung zugeordnet war.

25. Verfahren nach einem der Ansprüche 2 bis 24, **dadurch gekennzeichnet, dass** der skalare Aufspannfehler F zwischen zwei Beschreibungen des Messobjekts ermittelt wird, indem

   - für jedes Paar korrespondierender Raumpunkte die vektorielle Differenz $A_i$ bestimmt wird,
   - mindestens eine Vektorkomponente der vektoriellen Differenz $A_i$ als repräsentativer Differenzvektor $D_i$ ausgewählt wird und
   - die Länge des Differenzvektors $D_i$ als skalarer Abstandsfehler für das jeweilige Paar korrespondierender Raumpunkte bestimmt wird.

26. Verfahren nach Anspruch 25, **dadurch gekennzeichnet, dass** der für jedes Paar korrespondierender Raumpunkte ermittelte Abstandsfehler mit einem Gewichtsfaktor $Ga_i$ gewichtet wird.

27. Verfahren nach einem der Ansprüche 25 oder 26, **dadurch gekennzeichnet, dass** die vektorielle Differenz $A_i$ bei gegebenem Koordinatensystem K in den Vektorkomponenten ausgedrückt wird, die in einer der Hauptebenen des Koordinatensystems KXY, KYZ und KXZ und/oder entlang einer der Achsen KX, KY und KZ des Koordinatensystems liegen.

28. Verfahren nach einem der Ansprüche 25 oder 26, wobei den Raumpunkten mindestens einer der beiden Beschreibungen Raumrichtungen zugeordnet sind, **dadurch gekennzeichnet, dass** die vektoriellen Differenzen $A_i$ zwischen den Paaren korrespondierender Raumpunkte jeweils ausgedrückt werden

   - in einer Vektorkomponente $AN_i$ senkrecht zu der Ebene, die durch den entsprechenden Raumpunkt und die ihm zugeordnete Raumrichtung definiert ist,
   - und in einer Vektorkomponente $AL_i$, die innerhalb dieser Ebene liegt.

29. Verfahren nach Anspruch 28, **dadurch gekennzeichnet, dass** der vektoriellen Differenz $A_i$ ein positives Vorzeichen, +1, zugeordnet wird, wenn der Raumpunkt, der mit dem die Ebene definierenden Raumpunkt korrespondiert, oberhalb dieser Ebene liegt, und ein negatives Vorzeichen, -1, wenn der Raumpunkt, der mit dem die Ebene definierenden Raumpunkt korrespondiert, unterhalb dieser Ebene liegt.

30. Verfahren nach einem der Ansprüche 25 bis 29, wobei den Raumpunkten beider Beschreibungen Raumrichtungen zugeordnet sind, **dadurch gekennzeichnet, dass** für jedes Paar korrespondierender Raumpunkte ein Winkelfehler $w_i$ bestimmt wird.

31. Verfahren nach Anspruch 30, **dadurch gekennzeichnet, dass** der Winkelfehler $w_i$ mit einem Gewichtsfaktor $Gw_i$ gewichtet wird.

32. Verfahren nach den Ansprüchen 26 und 31, **dadurch gekennzeichnet, dass** der skalare Aufspannfehler $F_i$ für ein Paar korrespondierender Punkte ermittelt wird als

$$F_i = Ga_i \cdot \text{Länge}(D_i) + Gw_i \cdot w_i.$$

33. Verfahren nach einem der Ansprüche 2 bis 24, **dadurch gekennzeichnet, dass** der skalare Aufspannfehler $F_i$ zwischen einem Paar korrespondierender Raumpunkte zweier Beschreibungen des Messobjekts als Null ($F_i = 0$) angenommen wird, wenn

   - die vektorielle Differenz $A_i$ für dieses Paar korrespondierender Raumpunkte nicht bestimmt werden kann oder
   - wenn keine Vektorkomponente der vektoriellen Differenz $A_i$ als repräsentativer Differenzvektor $D_i$ ausgewählt werden kann oder
   - wenn sich die Länge des Differenzvektors $D_i$ nicht als skalarer Abstandsfehler bestimmen lässt.

**34.** Verfahren nach einem der Ansprüche 25 bis 33, **dadurch gekennzeichnet, dass** der skalare Aufspannfehler F zwischen zwei Beschreibungen des Messobjekts bestimmt wird als die mittlere quadratische Abweichung aus den skalaren Aufspannfehlern $F_i$ bezogen auf den Erwartungswert Null, das kleinst mögliche Fehlermaß für ein Paar korrespondierender Raumpunkte

$$F = SQRT(SUMME(1, n, (Ga_i \bullet Länge(D_i) \bullet Länge(D_i) + Gw_i \bullet w_i \bullet w_i))) /$$

$$SUMME(1, n, (Ga_i + Gw_i))$$

wobei n die Anzahl der Paare ist, für die ein Aufspannfehler $F_i$ bestimmt werden konnte.

**35.** Verfahren nach einem der Ansprüche 25 bis 33, **dadurch gekennzeichnet, dass** der skalare Aufspannfehler F zwischen zwei Beschreibungen des Messobjekts bestimmt wird als die mittlere Abweichung aus den Beträgen der skalaren Aufspannfehler $F_i$

$$F = SUMME(1, n, (BETRAG(Ga_i \bullet Länge(D_i)) + BETRAG(Gw_i \bullet w_i))) /$$

$$SUMME(1, n, (Ga_i + Gw_i))$$

wobei n die Anzahl der Paare ist, für die ein Aufspannfehler $F_i$ bestimmt werden konnte.

**36.** Verfahren nach einem der Ansprüche 25 bis 33, **dadurch gekennzeichnet, dass** der skalare Aufspannfehler F zwischen zwei Beschreibungen des Messobjekts bestimmt wird als die maximale Abweichung aus den Beträgen der skalaren Aufspannfehler $F_i$

$$F = MAXIMUM(BETRAG(F_1), BETRAG(F_2), ..., BETRAG(F_n)),$$

wobei n die Anzahl der Paare ist, für die ein Aufspannfehler $F_i$ bestimmt werden konnte.

**37.** Verfahren nach einem der Ansprüche 25 bis 33, **dadurch gekennzeichnet, dass** der skalare Aufspannfehler F zwischen zwei Beschreibungen des Messobjekts bestimmt wird als die maximale positive Abweichung der skalaren Aufspannfehler $F_i$

$$F = MAXIMUM(F_1, F_2, ..., F_n)$$

wobei n die Anzahl der Paare ist, für die ein Aufspannfehler $F_i$ bestimmt werden konnte.

**38.** Verfahren nach einem der Ansprüche 25 bis 33, **dadurch gekennzeichnet, dass** der skalare Aufspannfehler F zwischen zwei Beschreibungen des Messobjekts bestimmt wird als die maximale negative Abweichung der skalaren Aufspannfehler $F_i$

$$F = MINIMUM(F_1, F_2, ..., F_n)$$

wobei n die Anzahl der Paare ist, für die ein Aufspannfehler $F_i$ bestimmt werden konnte.

**39.** Verfahren nach einem der Ansprüche 1 bis 38, **dadurch gekennzeichnet, dass** als explorierendes Verfahren zur Modifikation der Transformation $T_{init}$ und der sich in Folge ergebenden Transformationen eine Intervallhalbierung durchgeführt wird.

**40.** Verfahren nach einem der Ansprüche 1 bis 38, **dadurch gekennzeichnet, dass** als explorierendes Verfahren zur Modifikation der Transformation $T_{init}$ und der sich in Folge ergebenden Transformationen eine Gradientenanalyse durchgeführt wird.

41. Verfahren nach einem der Ansprüche 1 bis 38, **dadurch gekennzeichnet, dass** als explorierendes Verfahren zur Modifikation der Transformation $T_{init}$ und der sich in Folge ergebenden Transformationen ein Newtonsches Verfahren zur Nullstellensuche durchgeführt wird.

42. Verfahren nach einem der Ansprüche 1 bis 38, **dadurch gekennzeichnet, dass** im Rahmen des explorierenden Verfahrens zur Modifikation der Transformation $T_{init}$ und der sich in Folge ergebenden Transformationen eine Fourierzerlegung durchgeführt wird.

43. Verfahren nach einem der Ansprüche 1 bis 42, **dadurch gekennzeichnet, dass** als Abbruchkriterium für die Exploration eine maximale Anzahl von Modifikationen der Transformation vorgegeben wird.

44. Verfahren nach einem der Ansprüche 1 bis 43, **dadurch gekennzeichnet, dass** als Abbruchkriterium für die Exploration ein Wert für den Aufspannfehler vorgegeben wird.

45. Verfahren nach einem der Ansprüche 1 bis 44, **dadurch gekennzeichnet, dass** die Exploration abgebrochen wird, wenn eine vorgegebene Anzahl von Modifikationen der Transformation nicht zu einer Verkleinerung des Aufspannfehlers geführt hat.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20